# EUROPÄISCHE PATENTANMELDUNG

(11) **EP 4 685 692 A1**
(43) Veröffentlichungstag der Anmeldung: **28.01.2026**
(21) Anmeldenummer: 25190640.0
(22) Anmeldetag: 21.07.2025
(51) Int. Cl.: G06K 19/06

(54) **VERFAHREN ZUR HERSTELLUNG EINER ERFASSUNGSEINRICHTUNG UND REINIGUNGSVORRICHTUNG MIT EINER ERFASSUNGSEINRICHTUNG**

(30) Priorität: 25.07.2024 DE 102024121259
(71) Anmelder: Alfred Kärcher SE & Co. KG, 71364 Winnenden (DE)
(72) Erfinder: Glattki, Thomas, 71364 Winnenden (DE); Dirnberger, Sven, 71364 Winnenden (DE)
(74) Vertreter: DTS Patent- und Rechtsanwälte PartmbB

(57) **Zusammenfassung**

Die vorliegende Erfindung betrifft ein Verfahren zur Herstellung einer RFID-basierten Erfassungseinrichtung (126) einer Reinigungsvorrichtung (10), über welche Erfassungseinrichtung (126) eine Anwesenheit einer zweiten Komponente (112) der Reinigungsvorrichtung (10) an einer ersten Komponente (106) der Reinigungsvorrichtung (10) erfassbar ist, wobei die erste Komponente (106) eine RFID-Leseeinheit (128) der Erfassungseinrichtung (126) umfasst und die zweite Komponente (112) ein RFID-Codierelement (148) in Form eines integrierten Schaltkreises (150) oder umfassend einen integrierten Schaltkreis (150) der Erfassungseinrichtung (126), wobei das Verfahren umfasst: Bereitstellen eines Gehäuses (116, 124, 174, 178, 184, 192) der ersten Komponente (106) oder eines Gehäuses (124) der zweiten Komponente (112) oder mindestens eines Trägerelementes (140, 152), Aufdrucken von elektrischen Leiterbahnen (158) und/oder einer Antenne (132) der Erfassungseinrichtung (126) auf das Gehäuse (116, 124, 174, 178, 184, 192) oder auf das mindestens eine Trägerelement (140, 152), das am Gehäuse (116, 124, 174, 178, 184, 192) der ersten Komponente (106) oder am Gehäuse (116, 124, 174, 178, 184, 192) der zweiten Komponente (112) anordenbar ist. Außerdem betrifft die Erfindung eine Reinigungsvorrichtung.

## Beschreibung

Die vorliegende Erfindung betrifft ein Verfahren zur Herstellung einer RFID-basierten Erfassungseinrichtung einer Reinigungsvorrichtung sowie eine Reinigungsvorrichtung mit einer derartigen Erfassungseinrichtung.

Im Stand der Technik ist es bekannt, dass RFID-basierte Erfassungseinrichtungen bei Reinigungsvorrichtungen beispielsweise zur Erkennung von Zubehör eingesetzt werden. Denkbar ist beispielsweise, den Typ des Zubehörs, dessen Zustand (beispielsweise verschlissen oder nicht) und/oder die ordnungsgemäße Anordnung des Zubehörs zu ermitteln. Die Erfassungseinrichtung umfasst zu diesem Zweck eine RFID-Leseeinheit und ein RFID-Codierelement, die elektromagnetisch miteinander in Wirkverbindung stehen. Im Codierelement ist eine Information über das Zubehör gespeichert, die von der Leseeinheit ausgelesen werden kann. Bekannt ist es, dass das Codierelement als gekapselter sogenannter "RFID-Tag" verwendet wird. Der Tag wird bei im Stand der Technik beschriebenen Lösungen zum Beispiel in einem Formwerkzeug für das Zubehör mit einem Kunststoffmaterial umspritzt.

Aufgabe der vorliegenden Erfindung ist es, ein Verfahren zur Herstellung der Erfassungseinrichtung bereitzustellen, mit dem eine kostengünstigere Fertigung möglich ist. Darüber hinaus ist es Aufgabe der Erfindung, eine Reinigungsvorrichtung mit einer derartigen Erfassungseinrichtung bereitzustellen.

Diese Aufgabe wird durch ein erfindungsgemäßes Verfahren zur Herstellung einer RFID-basierten Erfassungseinrichtung einer Reinigungsvorrichtung gelöst, über welche Erfassungseinrichtung eine Anwesenheit einer zweiten Komponente der Reinigungsvorrichtung an einer ersten Komponente der Reinigungsvorrichtung erfassbar ist, wobei die erste Komponente eine RFID-Leseeinheit der Erfassungseinrichtung umfasst und die zweite Komponente ein RFID-Codierelement in Form eines integrierten Schaltkreises oder umfassend einen integrierten Schaltkreis der Erfassungseinrichtung, wobei das Verfahren umfasst: Bereitstellen eines Gehäuses der ersten Komponente oder eines Gehäuses der zweiten Komponente oder mindestens eines Trägerelementes, Aufdrucken von elektrischen Leiterbahnen und/oder einer Antenne der Erfassungseinrichtung auf das Gehäuse oder auf das mindestens eine Trägerelement, das am Gehäuse der ersten Komponente oder am Gehäuse der zweiten Komponente anordenbar ist.

Beim erfindungsgemäßen Verfahren kann eine kostengünstige Herstellung dadurch erzielt werden, dass Leiterbahnen und/oder mindestens eine Antenne auf ein Gehäuse (der ersten und/oder zweiten Komponente) oder auf mindestens ein Trägerelement aufgedruckt werden. Das Trägerelement ist an einem der Gehäuse anordenbar und beispielsweise in einer hierfür geeigneten Aufnahme positionierbar. Durch das Aufdrucken können Fertigungsschritte, wie sie bei den im Stand der Technik eingesetzten Reinigungsvorrichtungen für die Integration der Erfassungseinrichtung erforderlich sind, eingespart werden.

"Gehäuse" kann vorliegend breit aufgefasst werden. Es kann sich hierbei zum Beispiel über ein Strukturbauteil der ersten oder zweiten Komponente handeln, insbesondere an einem Verbindungsbereich der Komponenten.

Zum Aufdrucken wird beispielsweise ein Aerosoldruckverfahren verwendet. Dies hat sich in der Praxis als vorteilhaft für eine kostengünstige Fertigung und für eine zuverlässige Funktion der Erfassungseinrichtung erwiesen.

Beispielsweise wird auf das Gehäuse der ersten Komponente oder ein an dem Gehäuse anordenbares Trägerelement eine Antenne und/oder elektrische Leiterbahnen aufgedruckt.

In entsprechender Weise kann vorgesehen sein, dass auf das Gehäuse der zweiten Komponente oder ein an dem Gehäuse anordenbares Trägerelement eine Antenne und/oder Leiterbahnen aufgedruckt werden.

Der Schritt des Aufdruckens kann bei dem Verfahren mehrere Einzelschritte umfassen. Die Einzelschritte können zeitlich unmittelbar nacheinander ausgeführt werden. Alternativ ist denkbar, dass zwischen den Einzelschritten weitere Fertigungsschritte beim Herstellen der Erfassungseinrichtung ausgeführt werden. Denkbar ist auch, dass mehrere Einzelschritte des Aufdruckens gleichzeitig zueinander ausgeführt werden. Beispielsweise wird das Gehäuse oder das Trägerelement der ersten Komponente gleichzeitig mit dem Gehäuse oder dem Trägerelement der zweiten Komponente hergestellt, aber in voneinander getrennten Maschinen.

Der Schritt des Aufdruckens umfasst vorzugsweise das Anbringen von elektrischen Kontakten (beispielsweise sogenannte "Pads") am Gehäuse oder am mindestens einen Trägerelement, wobei an den Kontakten mindestens ein elektrisches Bauelement elektrisch kontaktiert wird.

Das Bauelement kann beispielsweise ein elektrisches Anschlusselement sein.

Beispielsweise werden Kontakte für ein Anschlusselement eines elektrischen Anschlusskabels aufgedruckt, das an der ersten Komponente mit der RFID-Leseeinheit verbunden ist.

Das Kontaktelement ist zum Beispiel ein elektrisches Widerstandselement, beispielsweise ein Dämpfungswiderstand, zum Beispiel ein Parallelwiderstand oder Serienwiederstand.

Das Kontaktelement ist zum Beispiel ein Kondensator.

Das Kontaktelement wird beispielsweise zwischen eine jeweilige Antenne und die RFID-Leseeinheit oder den integrierten Schaltkreis geschaltet.

Der Schritt des Aufdruckens umfasst beispielsweise die Bereitstellung einer elektrischen Verbindung vom mindestens einen Bauelement zur Antenne, zum integrierten Schaltkreis und/oder zur RFID-Leseeinheit.

Vorteilhaft ist es, wenn der Schritt des Aufdruckens umfasst, an der ersten Komponente ein Anpassungsnetzwerk auf das Gehäuse oder auf ein am Gehäuse anbringbares Trägerelement aufzubringen. Über das Anpassungsnetzwerk kann eine Anpassung der Sende- und/oder Empfangsfrequenz eingestellt werden, damit die RFID-Leseeinheit den Schaltkreis eindeutig identifizieren kann. Das Anpassungsnetzwerk umfasst beispielsweise Leiterbahnen und/oder einen Kondensator wie vorstehend beschrieben. Komponenten des Anpassungsnetzwerks können beispielsweise als Bestandteil der Antenne aufgedruckt werden.

Die RFID-Leseeinheit wird beispielsweise auf einer elektrischen Leiterplatte bereitgestellt und im Gehäuse der ersten Komponente angeordnet. Beispielsweise erfolgt die Anordnung in einem Gehäuseabschnitt, in dem weitere elektrische Komponenten der ersten Komponente vorhanden sind. Die Anordnung ist beispielsweise räumlich entfernt zur Antenne, wobei die Verbindung zum Beispiel über ein Kabel erfolgen kann.

Der integrierte Schaltkreis wird bevorzugt ungehaust bereitgestellt und in einer Aufnahme des Gehäuses der zweiten Komponente angeordnet. Durch die Einsparung der Einhausung können die Herstellungskosten für die Erfassungseinrichtung geringgehalten werden. Der Schaltkreis wird insbesondere als sogenannter DIE als Abschnitt eines Wafers gefertigt und bereitgestellt. Der Schaltkreis wird zum Beispiel in die Aufnahme des Gehäuses eingelegt und durch aufgedruckte Leiterbahnen mit einer aufgedruckten Antenne verbunden.

Der Schritt des Aufdruckens umfasst günstigerweise das elektrische Kontaktieren von Kontaktelementen des Schaltkreises. Somit kann auch ein Bonding-Verfahren für den Schaltkreis, bei dem die jeweiligen Kontaktelemente mit weiteren elektrischen Bauteilen elektrisch verbunden werden, kostengünstig durchgeführt werden.

Das Gehäuse und/oder das mindestens eine Trägerelement sind vorzugsweise aus einem Kunststoffmaterial gefertigt.

Insbesondere kann auf eine Innenseite des Gehäuses aufgedruckt werden, oder das mindestens eine Trägerelement wird in einer innenseitig am Gehäuse angeordneten Aufnahme positioniert.

Denkbar ist, dass weitere Herstellungsschritte nach dem Aufdrucken folgen. Beispielsweise wird das Gehäuse und/oder das mindestens eine Trägerelement nach dem Schritt des Aufdruckens mittels eines additiven Fertigungsschrittes und/oder durch Umspritzen oder Aufspritzen bearbeitet. Vorteilhaft kann hierbei insbesondere die Fertigung in einer Form sein, in der der Aufdruckvorgang ausgeführt wird. Beispielsweise ist das Gehäuse oder das Trägerelement in einer Form angeordnet, in der der Aufdruckvorgang ausgeführt wird. Im Anschluss daran kann das Gehäuse oder das Trägerelement in der Form beispielsweise umspritzt oder aufgespritzt werden.

Wie eingangs erwähnt, betrifft die Erfindung auch eine Reinigungsvorrichtung.

Die erfindungsgemäße Reinigungsvorrichtung umfasst eine erste Komponente, eine zweite Komponente und eine RFID-Erfassungseinrichtung, die eine RFID-Leseeinheit als Bestandteil der ersten Komponente und ein RFID-Codierelement in Form eines integrierten Schaltkreises oder umfassend einen integrierten Schaltkreis als Bestandteil der zweiten Komponente umfasst. Die RFID-Erfassungseinrichtung ist hergestellt nach einem Verfahren der voranstehenden Ausführungen und umfasst an einem Gehäuse der ersten Komponente oder an einem am Gehäuse angeordneten Trägerelement und/oder an einem Gehäuse der zweiten Komponente oder an einem am Gehäuse angeordneten Trägerelement durch Aufdrucken hergestellte elektrische Leiterbahnen und/oder eine Antenne, die durch Aufdrucken hergestellt ist bzw. sind.

Die Vorteile, die bereits im Zusammenhang mit der Erläuterung des erfindungsgemäßen Verfahrens erwähnt wurden, können bei der erfindungsgemäßen Reinigungsvorrichtung ebenfalls erzielt werden. Vorteilhafte Ausführungsformen der Reinigungsvorrichtung ergeben sich durch vorteilhafte Ausführungsbeispiele des Verfahrens. Auf die voranstehenden Ausführungen wird verwiesen.

Am Gehäuse der ersten Komponente und/oder am Gehäuse der zweiten Komponente ist beispielsweise eine Aufnahme für das entsprechende Trägerteil angeordnet oder gebildet.

Die der RFID-Leseeinheit zugeordnete Antenne und/oder die dem Schaltkreis zugeordnete Antenne sind vorteilhafterweise an einer mechanischen Schnittstelle zwischen der ersten Komponente und der zweiten Komponente angeordnet, an der die Komponenten miteinander verbindbar oder verbunden sind. An der Schnittstelle sind insbesondere mechanische Verbindungselemente angeordnet. Durch die Anordnung an der Schnittstelle kann ein möglichst großer Überlapp der von den Antennen generierten oder empfangbaren Felder sichergestellt werden. Dadurch kann der RFID-Schaltkreis zuverlässig identifiziert werden.

Die erste Komponente und die zweite Komponente sind beispielsweise ausgestaltet, mehrere Relativstellungen zueinander einzunehmen. Dies ist beispielsweise dann denkbar, wenn die erste Komponente eine Hochdruckpistole ist und die zweite Komponente ein Mehrfach-Strahlrohr, das relativ zur Hochdruckpistole insbesondere durch Drehen zwei oder mehr Relativstellungen einnehmen kann.

Bei Vorhandensein einer Mehrzahl von Relativstellungen kann es günstig sein, dass eine Mehrzahl von integrierten Schaltkreisen und diesen jeweils zugeordneten Antennen von der zweiten Komponente umfasst sind, und wenn jeweils eine der Antennen mit einer der RFID-Leseeinheit zugeordneten Antenne in einer der Relativstellungen zusammenwirkt. Dies bietet die Möglichkeit, nicht nur die Anwesenheit der zweiten Komponente zu erfassen, sondern auch, welche Relativstellung die Komponenten zueinander einnehmen. In obigem Beispiel wird beispielsweise erkannt, welche Düse des Strahlrohrs in Position gebracht ist, wobei durch die Düse die Hochdruckflüssigkeit abgegeben wird.

Die Reinigungsvorrichtung kann insbesondere benutzergeführt sein. Beispielsweise ist ein Reinigungsvorrichtung handgeführt.

Alternativ oder ergänzend kann die Reinigungsvorrichtung zum Beispiel autonom ausgebildet sein im Hinblick auf eine robotische Reinigung.

Die erste Komponente kann zum Beispiel eine Bedieneinheit der Reinigungsvorrichtung sein und die zweite Komponente ein Zubehörteil oder ein Werkzeug der Reinigungsvorrichtung. Hierbei ist die Reinigungsvorrichtung zum Beispiel ein Hochdruckreinigungsgerät, die erste Komponente eine Hochdruckpistole und die zweite Komponente ein Strahlrohr, wobei es sich insbesondere um ein Mehrfach-Strahlrohr handeln kann.

Die Reinigungsvorrichtung kann beispielsweise ein Sauggerät sein, wobei die erste Komponente ein Gehäuse des Sauggerätes umfasst oder ist und die zweite Komponente ein Schmutzbehälter des Sauggerätes ist. Der Schmutzbehälter kann formstabil sein und ein Gehäuse aufweisen. Alternativ kann der Schmutzbehälter zum Beispiel formveränderlich sein, etwa ein Beutel aus einem Papiermaterial oder aus einem Vliesmaterial. Ein Verbindungselement eines derartigen Beutels kann beispielsweise das Gehäuse der zweiten Komponente im Sinne der Patentanmeldung sein.

Alternativ oder ergänzend kann die zweite Komponente beispielsweise ein Reinigungswerkzeug wie zum Beispiel eine bestimmte Art von Bürste sein, wobei vorzugsweise dessen Beschaffenheit erkannt werden kann. Die Bürste ist zum Beispiel eine Teppichbürste oder eine Hartbodenbürste. Ein Verbindungselement des Reinigungswerkzeugs kann im Sinne der Patentanmeldung beispielsweise das Gehäuse der zweiten Komponente sein und ein Verbindungselement des Sauggerätes das Gehäuse der ersten Komponente.

Die Reinigungsvorrichtung kann zum Beispiel ein Flächenreinigungsgerät sein, wobei die erste Komponente ein Gehäuse des Flächenreinigungsgerät umfasst oder ist und die zweite Komponente eine Reinigungswalze des Sauggerätes. Hierbei kann zum Beispiel eine Welle der Reinigungswalze das Gehäuse der zweiten Komponente im Sinne der Patentanmeldung sein.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Darstellung der erfindungsgemäßen Reinigungsvorrichtung, ausgestaltet als Hochdruckreinigungsgerät mit einer ersten Komponente in Gestalt einer Hochdruckpistole und einer zweiten Komponente in Gestalt eines Strahlrohrs;
- Figur 2:: eine vergrößerte Schnittansicht von Detail A in Figur 1;
- Figur 3:: eine schematische Darstellung eines Herstellungsschrittes beim Herstellen einer Erfassungseinrichtung;
- Figur 4:: schematisch einen integrierten Schaltkreis, eine Antenne und einen Kondensator auf einem Kunststoffträger als Bestandteil einer RFID-Erfassungseinrichtung;
- Figur 5:: eine schematische Teildarstellung einer Hochdruckpistole und eines Mehrfach-Strahlrohrs eines Hochdruckreinigungsgerätes;
- Figur 6:: eine Ansicht in Blickrichtung "6" in Figur 4;
- Figur 7:: eine Ansicht in Blickrichtung "7" in Figur 4;
- Figur 8:: eine erfindungsgemäße Reinigungsvorrichtung, ausgestaltet als Sauggerät; und
- Figur 9:: eine erfindungsgemäße Reinigungsvorrichtung, ausgestaltet als Flächenreinigungsgerät.

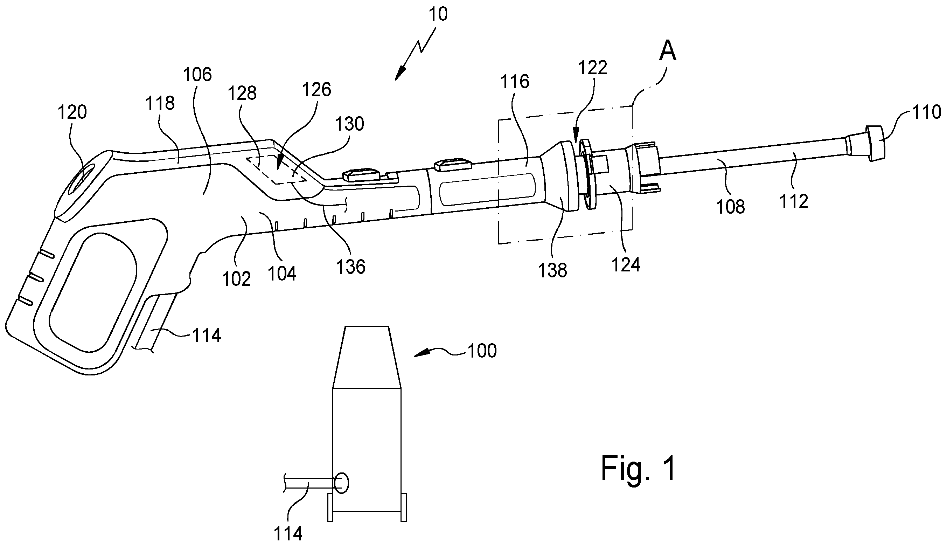

Die Figuren 1, 8 und 9 zeigen bevorzugte Ausführungsformen der erfindungsgemäßen Reinigungsvorrichtung 10, die jeweils eine RFID-basierte Erfassungseinrichtung aufweisen, die mittels eines bevorzugten Ausführungsbeispiels des erfindungsgemäßen Verfahrens hergestellt ist.

Die Reinigungsvorrichtung 10 in Figur 1 ist ein Hochdruckreinigungsgerät 100. Das Hochdruckreinigungsgerät 100 umfasst eine Bedieneinheit 102 in Form einer Hochdruckpistole 104. Die Hochdruckpistole 104 bildet vorliegend eine erste Komponente 106 des Reinigungsgerätes 100.

Weiter umfasst das Hochdruckreinigungsgerät 100 ein Strahlrohr 108 mit einer Düse 110, das vorliegend eine zweite Komponente 112 Hochdruckreinigungsgerätes 100 bildet.

In an sich bekannter Weise ist die Hochdruckpistole 104 über eine Schlauchleitung 114 an einem Hochdruckausgang eines Pumpaggregates des Hochdruckreinigungsgerätes 100 angeschlossen. Unter Druck gesetzte Flüssigkeit kann bei betätigter Hochdruckpistole 104 von der Düse 110 versprüht werden.

Die Hochdruckpistole 104 umfasst ein Gehäuse 116. Im Gehäuse 116 ist ein Aufnahmefach 118 für eine elektrische Einrichtung 120 angeordnet. Das Gehäuse 116 kann einteilig oder mehrteilig sein.

An einer mechanischen Schnittstelle 122 ist das Strahlrohr 108 mit der Hochdruckpistole 104 verbunden. Hierbei kann es sich beispielsweise in an sich bekannter Weise um eine Steck-Dreh-Verbindung handeln. An der Schnittstelle 122 sind jeweilige Verbindungselemente der Hochdruckpistole 104 und des Strahlrohrs 108 angeordnet.

Das Strahlrohr 108 umfasst seinerseits ein Gehäuse 124, das einteilig oder mehrteilig ausgestaltet sein kann.

Um die Anwesenheit des Strahlrohrs 108 an der Hochdruckpistole 104 zu erkennen, umfasst das Hochdruckreinigungsgerät 100 eine RFID-basierte Erfassungseinrichtung 126. Die Erfassungseinrichtung 126 umfasst eine RFID-Leseeinheit 128.

Die RFID-Leseeinheit 128 ist vorliegend auf einer Platine (Leiterplatte) 130 bereitgestellt und im Aufnahmefach 118 angeordnet. Der RFID-Leseeinheit 128 ist eine Antenne 132 und ferner ein Anpassungsnetzwerk 134 zugeordnet. Die RFID-Leseeinheit 128 ist über ein insbesondere verdrilltes Anschlusskabel 136 mit dem Anpassungsnetzwerk 134 und/oder der Antenne 132 elektrisch verbunden.

Vorliegend ist die RFID-Leseeinheit 128 räumlich entfernt von der Antenne 132 und vom Anpassungsnetzwerk 134 angeordnet. Die Antenne 132 und das Anpassungsnetzwerk 134 sind an einem dem Strahlrohr 108 zugewandten Endabschnitt 138 am Gehäuse 116 positioniert. Das Anschlusskabel 136 verläuft durch das Gehäuse 116.

Im vorliegenden Fall ist eine kostengünstige Fertigung der Erfassungseinrichtung 126 mittels des erfindungsgemäßen Verfahrens möglich. Insbesondere ist die Antenne 132 durch Aufdrucken gefertigt, insbesondere mittels eines Aerosoldruckverfahrens.

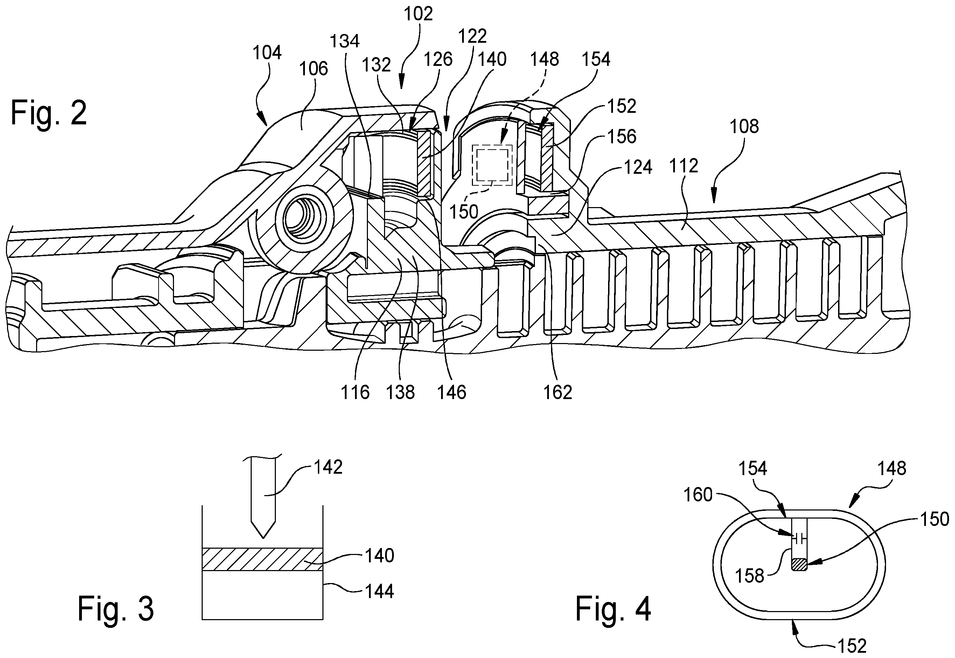

Bei dem Schritt des Aufdruckens wird im vorliegenden Beispiel ein Trägerelement 140 mittels einer Düse 142 eines Aerosoldruckers bedruckt (schematisch in Figur 3 dargestellt).

Das Trägerelement 140 ist vorliegend aus einem Kunststoffmaterial gefertigt und kann sich in einer Form 144 befinden. Nach dem Schritt des Aufdruckens können weitere Herstellungsschritte am Trägerelement 140 vorgenommen werden. Beispielsweise kann dieses umspritzt oder aufgespritzt werden. Alternativ oder ergänzend ist eine weitere Verarbeitung mittels eines additiven Herstellungsverfahrens denkbar.

Das Trägerelement 140 wird in einer Aufnahme 146 positioniert, die vom Gehäuse 116 gebildet ist.

Mittels des Aufdruckverfahrens kann ferner das Anpassungsnetzwerk 134 aufgedruckt werden. Das Anpassungsnetzwerk 134 umfasst beispielsweise als elektrisches Bauelement einen Kondensator. Denkbar ist, dass elektrische Kontakte aufgedruckt werden und ein Kondensator an den Kontakten (Pads) elektrisch kontaktiert wird.

Das Anpassungsnetzwerk 134 ist vorliegend direkt auf das Gehäuse 116 aufgedruckt. Beim Schritt des Aufdruckens können ferner elektrische Leiterbahnen zum Verbinden mit der Antenne 132 aufgedruckt werden.

Zum Anschließen des Anschlusskabels 136 ist es günstig, wenn elektrische Kontaktelemente auf das Gehäuse 136 aufgedruckt werden, an dem ein elektrisches Anschlusselement für das Anschlusskabel 136 elektrisch kontaktiert wird.

Auf der Seite der zweiten Komponente 112 umfasst die Erfassungseinrichtung 126 ein RFID-Codierelement 148. Das Codierelement 148 umfasst einen integrierten Schaltkreis 150, der vorliegend ungehaust ist. Es handelt sich dabei daher um einen DIE ohne Gehäuse und Füßchen für die elektrische Kontaktierung.

Ein Trägerelement 152 wird gemäß dem Verfahren mit einer Antenne 154 im Aerosolverfahren bedruckt. Wie im Fall der Antenne 132 kann das Trägerelement 152 vorkonfektioniert bereitgestellt werden und anschließend bei der Montage in eine korrespondierende Aufnahme 156 des Gehäuses 124 eingelegt werden.

Aufgedruckt werden auch etwaige elektrische Leiterbahnen sowie elektrische Kontaktelemente für Bauelemente.

Die Kontaktierung des Schaltkreises 150 erfolgt ebenfalls durch Aufdrucken.

Figur 4 zeigt schematisch auf der Seite des Strahlrohrs 108 den Schaltkreis 150 mit der Antenne 154, Leiterbahnen 158 und als Bauelement einen Kondensator 160, der auf den Pads angeordnet und mit diesen elektrisch kontaktiert wird.

Das Trägerelement 152 ist vorliegend an einem Endabschnitt 162 des Strahlrohrs 108 angeordnet, der der Hochdruckpistole 104 zugewandt ist. Hierbei ist insbesondere sichergestellt, dass in verbundenem Zustand die Felder der Antennen 132, 154 im Hinblick auf ein bestmögliches Signal überlappen.

Der Schaltkreis 150 kann auf dem Trägerelement 152 angeordnet und darauf beispielsweise fixiert sein. Alternativ kann der Schaltkreis 150 beispielsweise in eine Aufnahme am Gehäuse 124 eingelegt werden, gesondert vom Trägerelement 152.

Denkbar ist alternativ ein Aufdrucken der Antenne 154 sowie etwaiger Leiterbahnen 158 und/oder von Pads auf das Gehäuse 154.

Es versteht sich, dass vorzugsweise innenseitig auf die Gehäuse 116, 124 aufgedruckt wird.

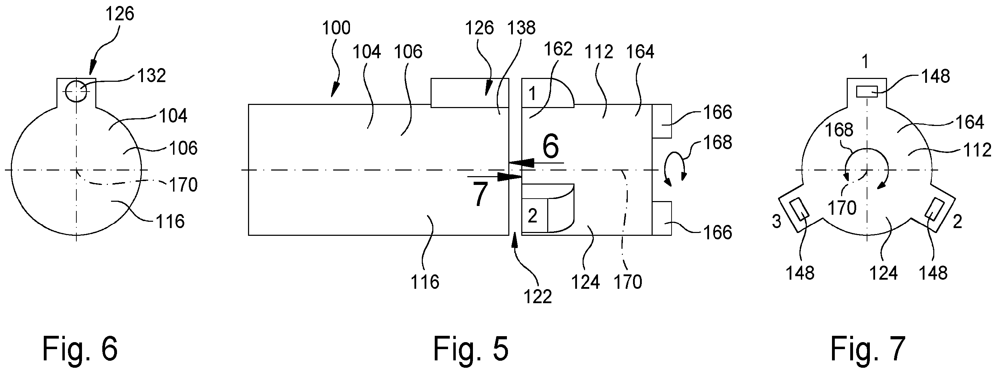

Beim erfindungsgemäßen Hochdruckreinigungsgerät 100 kann vorgesehen sein, dass ein Mehrfach-Strahlrohr 164 an die Hochdruckpistole 104 anschließbar ist. Die Figuren 5 bis 7 zeigen beispielhaft, dass bei einem Mehrfach-Strahlrohr 164, welches eine Mehrzahl von wahlweise mit dem Pumpaggregat in Verbindung bringbaren Düsen 166 umfasst, unterschiedliche Relativstellungen zwischen der Hochdruckpistole 104 (und damit der ersten Komponente 106) und dem Mehrfach-Strahlrohr 164 (und damit der zweiten Komponente 112) möglich sind.

Ein Doppelpfeil 168 symbolisiert die Möglichkeit, das Mehrfach-Strahlrohr 164 um eine gemeinsame Achse 170 mit der Hochdruckpistole 104 zu rotieren.

Einer jeweiligen Düse 166 ist ein Codierelement 148 zugeordnet. Abhängig davon, welche Düse 166 eingesetzt wird und welche Relativstellung vorhanden ist, kann das entsprechende Codierelement 148 mit der Leseeinheit 128 zusammenwirken. Dadurch ist die Möglichkeit gegeben, festzustellen, welche Düse 166 in Position rotiert ist. Die Figuren 5 und 7 stellen dies beispielhaft über eine mit der Ziffer "1" bezeichnete Düse und Relativstellung dar, wohingegen die mit den Ziffern "2" und "3" außer Betrieb sind.

Bei der jeweiligen Relativstellung ist sichergestellt, dass wie vorstehend erläutert ein möglichst großer Überlapp zwischen den Antennen 132 und 154 besteht.

Bezogen auf die Achse 170 beträgt der jeweilige Winkelabstand der Codierelemente 148 vorzugsweise 120°.

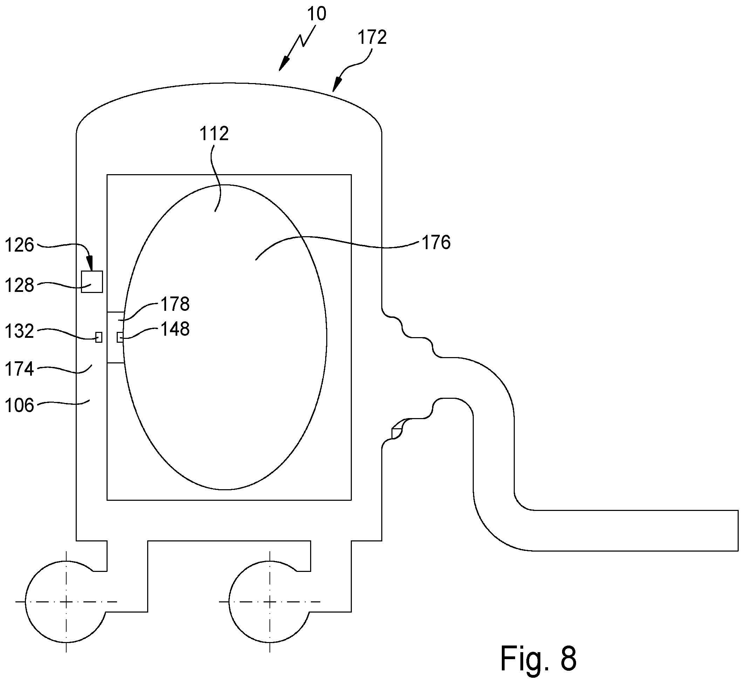

Die Erfindung kann beispielsweise bei einer erfindungsgemäßen Reinigungsvorrichtung 10 zum Einsatz kommen, die in Figur 8 schematisch dargestellt und als Sauggerät 172 ausgestaltet ist. Hierbei ist die erste Komponente 106 ein Gehäuse 174 des Sauggerätes 172. Die zweite Komponente 112 ist ein Schmutzbehälter 176. Die Leseeinheit 128 ist am Gehäuse 174 angeordnet, ebenso die aufgedruckten Komponenten, insbesondere die Antenne 132. Das Codierelement 148 ist am Schmutzbehälter 176 angeordnet. Als Gehäuse 178 im Sinne der Erfindung kann beispielsweise ein mechanisches Verbindungselement des Schmutzbehälters 176 mit dem Gehäuse 174 zum Einsatz kommen.

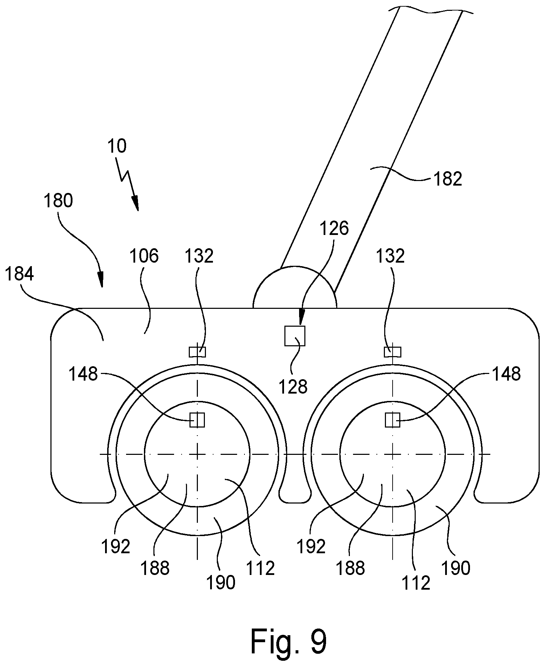

Figur 9 zeigt schematisch ein erfindungsgemäßes Hochdruckreinigungsgerät 100 in Gestalt eines Flächenreinigungsgerätes 180. Das Flächenreinigungsgerät 180 kann handgeführt sein und zu diesem Zweck einen von einem Benutzer ergreifbaren Stiel 182 umfassen. Alternativ ist das Flächenreinigungsgerät 180 beispielsweise autonom als Wischroboter ausgestaltet.

Wie beim Sauggerät 172 ist die erste Komponente 106 ein Gehäuse 184, das die Leseeinheit 128 und die aufgedruckten Komponenten aufnimmt, insbesondere die Antenne 132. Die zweite Komponente 112 ist eine Reinigungswalze 186, die das Codierelement 148 aufnimmt. Beispielsweise kommt eine Nabe oder eine Welle 188, an der ein Besatz 190 von Reinigungselementen angeordnet ist, als Gehäuse 192 im Sinne der Erfindung zum Einsatz.

Auch bei dem Sauggerät 172 oder dem Flächenreinigungsgerät 180 werden Komponenten wie insbesondere Antennen und/oder Leiterbahnen auf das jeweilige Gehäuse oder ein Trägerelement aufgedruckt, das in einem Gehäuse aufgenommen ist.

### Bezugszeichenliste

- 10: Reinigungsvorrichtung
- 100: Hochdruckreinigungsgerät
- 102: Bedieneinheit
- 104: Hochdruckpistole
- 106: erste Komponente
- 108: Strahlrohr
- 110: Düse
- 112: zweite Komponente
- 114: Schlauchleitung
- 116: Gehäuse
- 118: Aufnahmefach
- 120: elektrische Einrichtung
- 122: Schnittstelle
- 124: Gehäuse
- 126: Erfassungseinrichtung
- 128: RFID-Leseeinheit
- 130: Platine
- 132: Antenne
- 134: Anpassungsnetzwerk
- 136: Anschlusskabel
- 138: Endabschnitt
- 140: Trägerelement
- 142: Düse
- 144: Form
- 146: Aufnahme
- 148: RFID-Codierelement
- 150: integrierter Schaltkreis
- 152: Trägerelement
- 154: Antenne
- 156: Aufnahme
- 158: Leiterbahn
- 160: Kondensator
- 162: Endabschnitt
- 164: Mehrfach-Strahlrohr
- 166: Düse
- 168: Doppelpfeil
- 170: Achse
- 172: Sauggerät
- 174: Gehäuse
- 176: Schmutzbehälter
- 178: Gehäuse
- 180: Flächenreinigungsgerät
- 182: Stiel
- 184: Gehäuse
- 186: Reinigungswalze
- 188: Welle
- 190: Besatz
- 192: Gehäuse

## Patentansprüche

1. Verfahren zur Herstellung einer RFID-basierten Erfassungseinrichtung (126) einer Reinigungsvorrichtung (10), über welche Erfassungseinrichtung (126) eine Anwesenheit einer zweiten Komponente (112) der Reinigungsvorrichtung (10) an einer ersten Komponente (106) der Reinigungsvorrichtung (10) erfassbar ist, wobei die erste Komponente (106) eine RFID-Leseeinheit (128) der Erfassungseinrichtung (126) umfasst und die zweite Komponente (112) ein RFID-Codierelement (148) in Form eines integrierten Schaltkreises (150) oder umfassend einen integrierten Schaltkreis (150) der Erfassungseinrichtung (126),
wobei das Verfahren umfasst:
Bereitstellen eines Gehäuses (116, 124, 174, 178, 184, 192) der ersten Komponente (106) oder eines Gehäuses (124) der zweiten Komponente (112) oder mindestens eines Trägerelementes (140, 152), Aufdrucken von elektrischen Leiterbahnen (158) und/oder einer Antenne (132) der Erfassungseinrichtung (126) auf das Gehäuse (116, 124, 174, 178, 184, 192) oder auf das mindestens eine Trägerelement (140, 152), das am Gehäuse (116, 124, 174, 178, 184, 192) der ersten Komponente (106) oder am Gehäuse (116, 124, 174, 178, 184, 192) der zweiten Komponente (112) anordenbar ist.

2. Verfahren nach Anspruch 1,
**dadurch gekennzeichnet, dass**
zum Aufdrucken ein Aerosoldruckverfahren verwendet wird.

3. Verfahren nach Anspruch 1 oder 2,
**dadurch gekennzeichnet, dass**
auf das Gehäuse (116, 124, 174, 178, 184, 192) der ersten Komponente (106) oder ein an dem Gehäuse (116, 124, 174, 178, 184, 192) anordenbares Trägerelement (140, 152) und/oder auf das Gehäuse (116, 124, 174, 178, 184, 192) der zweiten Komponente (112) oder ein an dem Gehäuse (116, 124, 174, 178, 184, 192) anordenbares Trägerelement (140, 152) jeweils eine Antenne (132) und/oder elektrische Leiterbahnen (158) aufgedruckt werden.

4. Verfahren nach einem der voranstehenden Ansprüche,
**dadurch gekennzeichnet, dass**
der Schritt des Aufdruckens das Anbringen von elektrischen Kontakten am Gehäuse (116, 124, 174, 178, 184, 192) oder am mindestens einen Trägerelement (140, 152) umfasst, wobei an den Kontakten mindestens ein elektrisches Bauelement elektrisch kontaktiert wird, das insbesondere eines der Folgenden umfasst:
- ein elektrisches Anschlusselement;
- ein elektrisches Widerstandselement;
- einen Kondensator (160).

5. Verfahren nach Anspruch 4,
**dadurch gekennzeichnet, dass**
der Schritt des Aufdruckens umfasst, eine elektrische Verbindung vom mindestens einen Bauelement zur Antenne (132, 154), zum integrierten Schaltkreis (150) und/oder zur RFID-Leseeinheit (128) bereitzustellen.

6. Verfahren nach einem der voranstehenden Ansprüche,
**dadurch gekennzeichnet, dass**
der Schritt des Aufdruckens umfasst, an der ersten Komponente (106) ein Anpassungsnetzwerk (134) auf das Gehäuse (116, 124, 174, 178, 184, 192) oder auf ein am Gehäuse (116, 124, 174, 178, 184, 192) anbringbares Trägerelement (140, 152) aufzubringen.

7. Verfahren nach einem der voranstehenden Ansprüche,
**dadurch gekennzeichnet, dass**
die RFID-Leseeinheit (128) auf einer elektrischen Leiterplatte bereitgestellt und im Gehäuse (116, 124, 174, 178, 184, 192) der ersten Komponente (106) angeordnet wird und/oder dass der integrierte Schaltkreis (150) ungehaust bereitgestellt wird und in einer Aufnahme (146, 156) des Gehäuses (116, 124, 174, 178, 184, 192) der zweiten Komponente (112) angeordnet wird.

8. Verfahren nach einem der voranstehenden Ansprüche,
**dadurch gekennzeichnet, dass**
der Schritt des Aufdruckens das elektrische Kontaktieren von Kontaktelementen des Schaltkreises (150) umfasst.

9. Verfahren nach einem der voranstehenden Ansprüche,
**dadurch gekennzeichnet, dass**
mindestens eines der Folgenden gilt:
- das Gehäuse (116, 124, 174, 178, 184, 192) und/oder das mindestens eine Trägerelement (140, 152) ist aus einem Kunststoffmaterial gefertigt;
- es wird auf eine Innenseite des Gehäuses (116, 124, 174, 178, 184, 192) aufgedruckt oder das mindestens eine Trägerelement (140, 152) wird in einer innenseitig am Gehäuse (116, 124, 174, 178, 184, 192) angeordneten Aufnahme (146, 156) positioniert.

10. Verfahren nach einem der voranstehenden Ansprüche,
**dadurch gekennzeichnet, dass**
das Gehäuse (116, 124, 174, 178, 184, 192) und/oder das mindestens eine Trägerelement (140, 152) nach dem Schritt des Aufdruckens mittels eines additiven Fertigungsschrittes und/oder durch Umspritzen oder Aufspritzen bearbeitet wird.

11. Reinigungsvorrichtung (10),
umfassend eine erste Komponente (106), eine zweite Komponente (112) und eine RFID-Erfassungseinrichtung (126), die eine RFID-Leseeinheit (128) als Bestandteil der ersten Komponente (106) und ein RFID-Codierelement (148) in Form eines integrierten Schaltkreises (150) oder umfassend einen integrierten Schaltkreis (150) als Bestandteil der zweiten Komponente (112) umfasst, wobei die RFID-Erfassungseinrichtung (126), hergestellt nach einem Verfahren der voranstehenden Ansprüche, an einem Gehäuse (116, 124, 174, 178, 184, 192) der ersten Komponente (106) oder an einem am Gehäuse (116, 124, 174, 178, 184, 192) angeordneten Trägerelement (140, 152) und/oder an einem Gehäuse (116, 124, 174, 178, 184, 192) der zweiten Komponente (112) oder an einem am Gehäuse (116, 124, 174, 178, 184, 192) angeordneten Trägerelement (140, 152) durch Aufdrucken hergestellt(e) elektrische Leiterbahnen (158) und/oder eine Antenne (132, 154) umfasst.

12. Reinigungsvorrichtung (10) nach Anspruch 11,
**dadurch gekennzeichnet, dass**
die dem RFID-Leseeinheit (128) zugeordnete Antenne (132, 154) und die dem Schaltkreis (150) zugeordnete Antenne (132, 154) an einer mechanischen Schnittstelle (122) zwischen der ersten Komponente (106) und der zweiten Komponente (112) angeordnet sind, an der die Komponenten (106, 112) miteinander verbindbar oder verbunden sind.

13. Reinigungsvorrichtung (10) nach Anspruch 11 oder 12,
**dadurch gekennzeichnet, dass**
die erste Komponente (106) und die zweite Komponente (112) ausgestaltet sind, mehrere Relativstellungen zueinander einzunehmen, wobei eine Mehrzahl von integrierten Schaltkreisen (150) und diesen jeweils zugeordneten Antennen (132, 154) von der zweiten Komponente (112) umfasst sind, und wobei jeweils eine der Antennen (132, 154) mit einer der RFID-Leseeinheit (128) zugeordneten Antenne (132, 154) in einer der Relativstellungen zusammenwirkt.

14. Reinigungsvorrichtung (10) nach einem der Ansprüche 11 bis 13,
**dadurch gekennzeichnet, dass**
die erste Komponente (106) eine Bedieneinheit (102) der Reinigungsvorrichtung (10) ist und die zweite Komponente (112) ein Zubehörteil oder ein Werkzeug der Reinigungsvorrichtung (10).

15. Reinigungsvorrichtung (10) nach einem der Ansprüche 11 bis 13,
**dadurch gekennzeichnet, dass**
die Reinigungsvorrichtung (10) ein Sauggerät (172) ist, wobei die erste Komponente (106) ein Gehäuse (116, 124, 174, 178, 184, 192) des Sauggerätes (172) umfasst oder ist und die zweite Komponente (112) ein Schmutzbehälter (176) oder ein Reinigungswerkzeug des Sauggerätes (172) ist oder dass die Reinigungsvorrichtung (10) ein Flächenreinigungsgerät (180) ist, wobei die erste Komponente (106) ein Gehäuse (116, 124, 174, 178, 184, 192) des Flächenreinigungsgerät (180) umfasst oder ist und die zweite Komponente (112) eine Reinigungswalze (186) des Flächenreinigungsgerät (180).
